# FASCICULE DE BREVET EUROPEEN

(11) **EP 2 245 884 B1**
(45) Date de publication et mention de la délivrance du brevet: **04.06.2014**
(21) Numéro de dépôt: 09701782.6
(22) Date de dépôt: 14.01.2009
(51) Int. Cl.: H04W 40/02

(54) **PROCÉDÉ D'OPTIMISATION DES RESSOURCES DE TRANSMISSION PAR BOUCLAGE INTERCELLULAIRE DANS UN RÉSEAU CELLULAIRE DE RADIOCOMMUNICATION MOBILE, RÉSEAU ET ADAPTATEURS LOCAUX CORRESPONDANTS**
VERFAHREN ZUR OPTIMIERUNG VON ÜBERTRAGUNGSRESSOURCEN ANHAND VON INTERZELLULAREM LOOP-BACK IN EINEM MOBILFUNKNETZ SOWIE ENTSPRECHENDES LOKALES NETZ UND ADAPTER
METHOD FOR OPTIMISING TRANSMISSION RESOURCES BY INTERCELLULAR LOOP-BACK IN A MOBILE CELLULAR RADIOCOMMUNICATION NETWORK, AND CORRESPONDING LOCAL NETWORK AND ADAPTERS

(30) Priorité: 15.01.2008 FR 0850230; 25.06.2008 FR 0854241
(43) Date de publication de la demande: 03.11.2010
(73) Titulaire: CELL & SAT, 75001 Paris (FR)
(72) Inventeur: MOULY, Michel, F-91120 Palaiseau (FR); VERHULST, Didier, F-78170 La Celle Saint Cloud (FR); CHEVAL, Pierrick, F-44700 Orvault (FR)
(74) Mandataire: Le Saux, Gaël
(86) Numéro de dépôt international: PCT/EP2009/050391
(87) Numéro de publication internationale: WO 2009/090193

(56) Documents cités:
- EP-A- 1 603 351
- EP-A- 1 850 605
- EP-A1- 1 968 258
- WO-A-2007/104743

## Description

### 1 Domaine de l'invention

Le domaine de l'invention est celui des réseaux de communication. Plus précisément, l'invention concerne les réseaux cellulaires tels que notamment, mais non exclusivement, le GSM (« Global System for Mobile » en anglais) ou l'UMTS (« Universal Mobile Telecommunications Service » en anglais).

L'invention s'applique à tout réseau cellulaire dans lequel il est utile d'optimiser l'utilisation des ressources de transmission.

Il s'applique particulièrement, mais non exclusivement, à un réseau cellulaire comprenant par exemple une liaison radio par satellite permettant de relier un ensemble de stations, appelées stations de base (BTS dans le cas du réseau GSM), reliées aux contrôleurs de stations de base (BSC dans le cas du réseau GSM). Dans ce cas, la ressource satellite constitue naturellement une ressource chère à utiliser, et qu'il est intéressant d'optimiser et d'économiser le plus possible.

L'invention est ainsi particulièrement adaptée à la mise en oeuvre d'un réseau cellulaire dans des zones où le trafic des communications est relativement faible, comme les zones rurales par exemple, et où les techniques classiques requièrent des coûts d'investissement et surtout de fonctionnement relativement élevés au regard de ce trafic faible.

Mais elle s'applique plus généralement à toute situation où la gestion de ressources est critique.

### 2 Techniques de l'art antérieur

Tout d'abord, il est important de noter que, par souci de clarté, on présente les inconvénients de l'état de la technique dans le cas particulier du standard GSM. Cependant, la présente invention s'applique à tout type de réseau cellulaire, tels que par exemple ceux définis par le projet 3GPP (pour « Third Generation PartnerShip Project » en anglais). L'homme du métier pourra aisément mettre en oeuvre la présente invention dans un réseau de type UMTS ou autre.

La popularité grandissante du système GSM dans le monde entier a conduit les opérateurs à déployer ce service non seulement dans les régions métropolitaines, mais aussi de plus en plus dans des zones rurales et plus isolées ou éloignées. Dans ce dernier type de régions, une infrastructure terrestre est souvent insuffisante ou mal adaptée pour assurer une bonne couverture de réseau. Un système de liaison radio par satellite est alors un très bon moyen d'étendre le service GSM et ce type de système est aujourd'hui communément utilisé dans de nombreuses régions du monde.

Cependant, les ressources radio satellite restent coûteuses à ce jour, et toute la problématique de ce type d'application réside dans les techniques de réduction de la bande passante nécessaire à la transmission des données et améliorer la qualité par voie radio satellite.

Une telle problématique reste notamment valable dans le cas où deux utilisateurs sont situés dans la même cellule géographique, ou tout le moins localisés dans des cellules proches l'une de l'autre. Dans un tel cas, on conçoit que les techniques classiques de transmission en réseau GSM, par essence centralisé, consomment des ressources trafic bien supérieures à ce que permettrait un acheminement optimisé.

Pour plus de clarté, on décrit ci-après les inconvénients de l'art antérieur dans le cas spécifique d'un système GSM mis en oeuvre par l'intermédiaire d'une liaison satellite, et dans lequel deux utilisateurs situés dans une même cellule ou dans deux cellules suffisamment voisines du réseau GSM, en aval de la liaison satellite, sont en communication.

### 2.1 Architecture du GSM

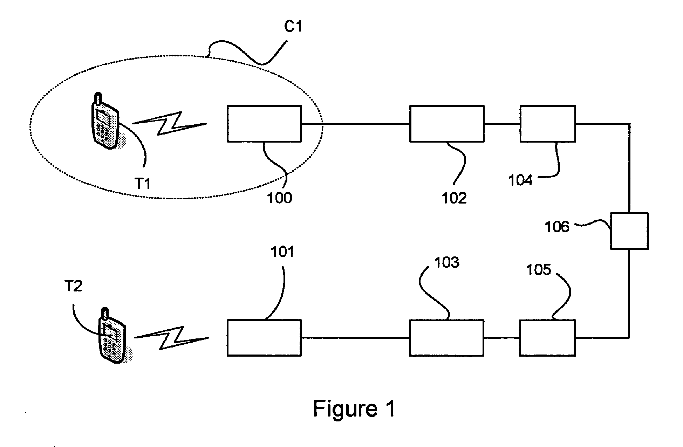

En relation avec la figure 1, l'architecture classique d'un réseau cellulaire de type GSM comprend un commutateur de service mobile 106, dit MSC (pour « Mobile Switching Center » en anglais), un contrôleur de station de base 102 (et 103), dit BSC (pour « Base Station Controller » en anglais) et enfin une ou plusieurs stations de bases 100 (et 101), dites BTS (pour « Base Transceiver Station » en anglais).

Chaque BTS assure la couverture radio GSM dans une ou plusieurs cellules. A titre d'exemple, en relation avec la figure 1, la BTS 100 est contrôlée par le BSC 102 et couvre la cellule géographique C1, dans laquelle se trouve au moins un utilisateur disposant d'une Station Mobile (MS) de radiocommunication T1.

Plus précisément, le MSC contrôle la configuration des appels pour chaque appel entrant ou sortant, et il a un rôle d'interface avec les autres réseaux de télécommunications. Chaque communication passe par le MSC 106, qui contrôle plusieurs BSC (102, 103) par l'intermédiaire d'un équipement de transcodage et d'adaptation TRAU (104, 105).

Le BSC, quant à lui, est chargé d'allouer les canaux radio nécessaires pour chaque appel. Il gère les transferts intercellulaires entre deux BTS. Un seul BSC supporte plusieurs BTS qui assurent la couverture d'une large zone géographique.

Enfin, une BTS a pour rôle d'effectuer la transmission radio GSM avec les utilisateurs de Stations Mobiles. Les BTS sont localisées à proximité de pylônes supportant des antennes, et réparties dans l'espace géographique de couverture du réseau cellulaire.

Le standard GSM et ses évolutions, tels que défini par le groupe 3GPP, utilise la compression de voix. Cette compression est réalisée le TRAU (104, 105). Selon la norme GSM, le TRAU (104, 105) peut être implémenté au site MSC, au site BSC ou encore au site BTS. Les considérations économiques conduisent à implémenter de préférence le TRAU (104, 105) au site MSC, de façon à réduire les coûts de transmission.

Plusieurs types de codecs ont été définis par le groupe 3GPP. Le codec GSM FR « plein débit » (« full rate » en anglais) opère à un débit de 13kbit/s. Les codecs HR « demi débit » (« half rate » en anglais) et EFR « plein débit étendu » (« enhanced full rate ») opèrent respectivement à 5,6 kbit/s et 12,2 kbit/s. Après transcodage, la parole à 64 kbit/s compressée à 13 / 12,2 kbit/s (respectivement 5.6 kbit/s) est véhiculée la station de base BTS sur un intervalle de temps à 16 kbit/s (respectivement 8 kbit/s). Selon la spécification 3GPP TS 08.60 (respectivement TS 08.61), la parole compressée est transmise à la BTS toutes les 20 ms selon le format de la trame TRAU.

Ces mêmes principes s'appliquent aux codages AMR (en anglais « Adaptative Multi Rate ») plein débit « FR » et débit réduit « HR ».

La trame TRAU transporte, en plus des informations de parole compressée, des informations de signalisation de type « bits de contrôle » permettant d'optimiser la qualité des communications entre l'entité de transcodage et l'unité de codage-décodage de canal CCU (pour « Channel Codec Unit » en anglais) à la BTS. Ces bits de contrôle permettent en particulier d'assurer la synchronisation des informations échangées, de définir le type de codage utilisé (FR, EFR, HR ou AMR) et aussi d'indiquer la discontinuité de la transmission liée aux silences de la parole (DTX).

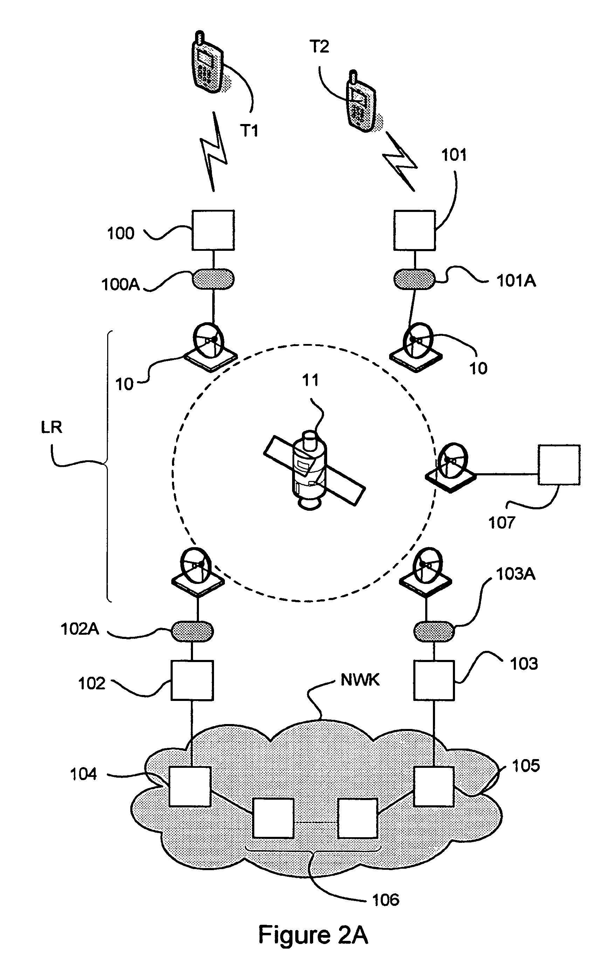

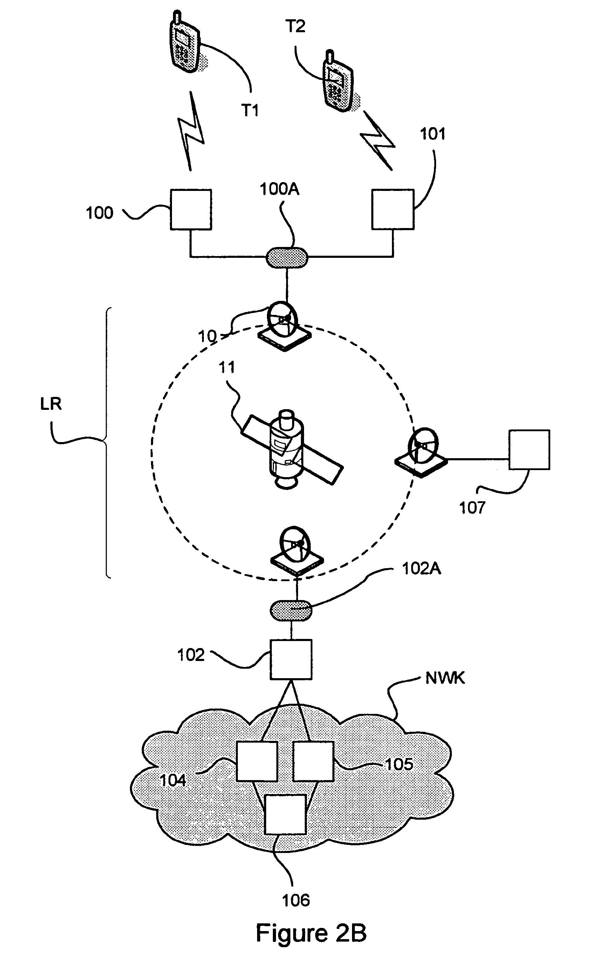

De façon à introduire la mise en oeuvre d'une liaison satellite au sein d'un réseau cellulaire, on décrit maintenant succinctement, en relation avec la figure 2, les interfaces mises en oeuvre et leur dénomination entre les entités principales introduites précédemment.

L'interface entre un MSC (106) et un TRAU (104, 105) est dite interface A.

L'interface entre un BSC 102 et la BTS 100 est nommée l'interface Abis.

Dans le cas où le TRAU 104 est implémenté au site MSC, l'interface entre le TRAU 104 et le BSC 102 est appelé Ater.

Une liaison satellite peut être utilisée au sein de la chaîne de transmission pour chacune de ces interfaces. La problématique principale de l'insertion d'une liaison satellite sur l'une de ces interfaces est alors de déterminer comment transmettre de façon efficace les informations nécessaires tout en minimisant la bande radio nécessaire de transmission par satellite.

L'interface Abis connecte un BSC avec une BTS et est constituée d'une ou plusieurs liaisons à 2 Mbit/s (Standard ITU G703/ G704). C'est une des interfaces qui est classiquement mise en oeuvre avec une transmission par satellite.

Cette interface Abis transporte des données de trafic, telle que la voix compressée et des informations de signalisation.

Sur l'interface Abis, deux types d'information de signalisation circulent :
- des messages de signalisation échangés avec la BTS, transportés dans un canal spécifique de signalisation, qui permettent de contrôler à la fois l'équipement BTS lui même et les terminaux mobiles (MS) qui sont en relation avec elle. Les messages correspondants sont spécifiés par le GSM dans la spécification TS 08.58 ;
- des informations intrabande (« in band » en anglais) de contrôle qui sont transmises dans le même flux que les informations de trafic. Ces informations sont transmises, au sein des trames TRAU. Ces informations sont des « bits de contrôle », complémentaires des « bits de données », dont la signification est expliquée dans les spécifications TS 08.60 / 08.61 ;

Les informations de signalisation du premier type, constituées de messages protocolaires, sont véhiculées sur des intervalles de temps dédiés, avec typiquement sur l'interface Abis un débit de 64 kbit/s.

Chaque lien à 2 Mbit/s de l'interface Abis dispose de 31 intervalles de temps (TS pour « Time Slots » en anglais) qui sont alloués aux voies de signalisation ou aux canaux de parole. Selon la typologie du réseau et les choix de codage de la parole, un lien à 2 Mbit/s sur l'interface Abis peut typiquement être utilisée pour supporter jusqu'à dix canaux d'accès radio « transmission », dits TRX (en anglais « Transceiver »). Chaque TRX supporte lui-même huit canaux GSM dédiés à la parole à plein débit FR ou seize canaux GSM à demi débit HR. La réservation correspondante des canaux de parole sur l'interface Abis représente pour chaque TRX une allocation de 2 TS à 64 kbit/s (8* 16 kbit/s = 16* 8 kbit/s= 128 kbit/s).

Selon le dimensionnement du réseau GSM, la BTS est équipée d'un nombre N de TRXs, ce qui induit une occupation proportionnelle du nombre de TS sur l'interface Abis.

### 2.2 Les applications satellite

On décrit en relation avec les figures 2A et 2B un réseau GSM classique mettant en oeuvre une liaison radio de type satellite.

Le réseau GSM comprend alors, classiquement, pour chacune des cellules du réseau cellulaire un MSC 106, un TRAU 104 (tous deux dans le réseau NWK), un BSC 102 ainsi qu'une station de base BTS 100, assurant les communications aux utilisateurs disposant d'un terminal mobile T1 et localisés dans la zone de couverture de la BTS 100.

Toujours en relation avec la figure 2A et 2B, l'ensemble comprenant les transcodeurs TRAU (104, 105) et le ou les centres de communication réseau MSC (106) qui sont compris au sein du réseau NWK constitue le coeur du réseau cellulaire et est appelé réseau de connexion central.

De plus, une liaison radio LR est mise en oeuvre au niveau de l'interface Abis, entre le BSC 102 et la BTS 100. Cette liaison radio LR est par exemple assurée par un système radio par satellite contenant des antennes 10 d'émission-réception de chaque côté de l'interface Abis, et un satellite 11.

On notera qu'il est possible en fait d'insérer une liaison radio par satellite au niveau de chacune des interfaces mises en oeuvre dans le système GSM : A, Abis, Ater. Mais l'insertion d'une telle liaison satellite au niveau de l'interface Abis, c'est-à-dire entre des BSC et des BTS, est préférée pour étendre le service GSM à des localisations géographiques distantes et de faible densité d'utilisateurs avec des coûts d'infrastructure minimaux.

De façon à éviter toute confusion, il est important de noter que dans une telle implémentation, deux types de systèmes radio sont mis en oeuvre, mais qu'ils n'ont pas le même rôle :
- Le réseau GSM en lui-même utilise de premières liaisons radio pour communiquer, et notamment pour effectuer la transmission entre les BTS et les utilisateurs de terminaux mobiles.

Le système satellite consiste en une seconde liaison de transmission radio. Classiquement, un dispositif appelé Hub alloue les ressources radio nécessaires à la transmission des données par satellite entre BSC et BTS.

Concrètement, lorsque deux utilisateurs sont en communication, la réalisation usuelle dans un réseau GSM demande que le flux de parole transite par le BSC, ainsi que par le TRAU et le MSC. Ceci nécessite alors l'allocation de ressources sur deux canaux de la liaison satellite : la voie montante et la voie descendante. Ceci reste notamment valable quelle que soit la position des utilisateurs (appelant et destinataires), sans que l'éventuelle proximité de ceux-ci soit prise en compte.

### 2.3 Architecture de bouclage connue

En relation avec la figure 2B, selon une architecture connue, un adaptateur de station CST 100A et un adaptateur de passerelle CSG 102A pour permettre le bouclage des communications dans une zone de bouclage locale. Un bouclage local peut ainsi être obtenu en bouclant localement les communications de deux terminaux qui se trouvent contrôlé par une même BTS ou comme cela est présenté en figure 2B, dans une zone contrôlée par un unique adaptateur de station 100A. Au sein de cette architecture connue, il est donc possible de ne pas transmettre toutes les données au MSC 106 (ni au BSC 102 et ni au TRAU 104, 105). On n'utilise donc pas le réseau de liaison d'amenée (réseau intercalaire) qui utilise la liaison radio LR, ce qui permet d'économiser de la bande passante et de diminuer le temps de transit des données formant la communication.

### 3 Inconvénients de l'art antérieur

A ce jour, la mise en oeuvre d'une liaison radio, par satellite notamment, entre les stations de base BTS et leurs BSC correspondant d'un réseau cellulaire entraîne, lors d'une communication entre deux utilisateurs desservis chacun par une BTS différente connectée par satellite, l'allocation de deux canaux radio : un premier pour l'appelé et un second pour l'appelant.

En effet, l'application usuelle demande que la parole « remonte » jusqu'au MSC du réseau GSM. Le flux de parole passe alors deux fois par le satellite (ou par le réseau à liaison d'amenée). Une communication d'une première cellule contrôlée par une première BTS à une deuxième cellule contrôlée par une deuxième BTS souffre donc inutilement de l'ajout de deux fois le délai de transfert par satellite, de l'ordre de 250 millisecondes et de la transmission de l'intégralité des données à leurs contrôleurs de stations de base respectifs (BSCs). L'existence de ce double lien satellite et de cette transmission de données aux BSCs ajoute donc non seulement un temps de transmission non négligeable qui rejaillit sur la qualité de la communication perçue par les utilisateurs, mais elle est de plus très coûteuse.

Ainsi, il n'existe à ce jour aucun moyen permettant de spécifier le caractère de proximité d'un appel d'une première cellule contrôlée par une première BTS à une deuxième cellule contrôlée par un deuxième BTS. Les techniques actuelles ne gèrent donc pas une telle configuration de manière optimisée.

En d'autres termes, toujours en relation avec la figure 2A, un terminal T1, situé dans la zone de couverture de la BTS 100 qui souhaite entrer en communication avec un terminal T2, situé dans la zone de couverture d'une BTS 101 utilise deux fois les services du satellite 11 par le biais de la liaison radio LR. Les données sont transmises par la BTS 100 au BSC 102 et au TRAU 104 dont elle dépend. Le TRAU 104 communique, également par une liaison classique à un TRAU 105 et BSC 103 dont dépend la BTS 101. Ainsi, pour établir la communication, les données transitent jusqu'aux BSC et TRAU, en utilisant deux fois la liaison radio satellitaire : une fois pour aller de la BTS 100 au BSC 102 / TRAU 104 et une fois pour aller du TRAU 105 / BSC 103 à la BTS 101.

Le document WO 2007/104743 du 20 septembre 2007, au nom de la demanderesse, porte sur une opération de bouclage intercellulaire dans un réseau cellulaire.

Le document EP 1 603 351 du 7 décembre 2005 traite d'une méthode et d'un dispositif de routage local. Ce document EP 1 603 351 divulgue plus particulièrement une méthode et un dispositif chargé de surveiller les données qui transitent entre des terminaux lors de l'établissement d'un canal de communication montant et d'un canal descendant. Lorsque des données surveillées révèlent que les terminaux se situent dans une même zone de bouclage, le dispositif est chargé de router localement les données entre les terminaux, sans transmission du trafic au commutateur d'appel.

Le document EP 1 850 605 » du 31 octobre 2007 porte sur une méthode de bouclage local dont l'objectif est de résoudre certains inconvénients posés par la première méthode divulgué dans le document EP 1 603 351*.*

Le document EP-1968258 du 10 septembre 2008 porte sur une opération de bouclage dans laquelle in insère, au sein de données de parole, des marqueurs afin de détecter la possibilité de réaliser un bouclage.

### 4 Exposé de l'invention

Ces différents objectifs, ainsi que d'autres qui apparaîtront par la suite, sont atteints à l'aide d'un procédé de transmission de données échangées par deux terminaux d'un réseau cellulaire de radiocommunication chacun desdits terminaux étant respectivement associé à une station de base dudit réseau cellulaire.

Selon l'invention, un tel procédé comprend :
- une étape d'identification d'un chemin de transmission raccourci entre lesdites stations de base ;
- une étape de transmission d'au moins une partie desdites données par l'intermédiaire dudit chemin de transmission raccourci, dite opération de bouclage intercellulaire.

Selon l'invention, les données peuvent comprendre des données de parole, des données audio/vidéo ou des données textuelles.

Ainsi, l'invention permet de ne pas transmettre au moins un partie des données à d'autres composant du réseau (tels que des contrôleurs de station de base, des transcodeurs, des « hubs » satellitaires) En d'autres termes, les ressources du réseau sont économisées et les temps de transit des données sont réduits par le fait que les stations de bases communiquent directement entre elles. Ainsi, lorsque la communication entre deux terminaux nécessite l'utilisation d'une liaison satellitaire, l'invention permet de ne pas passer deux fois par cette liaison, mais une seule et unique fois en permettant une communication entre les stations de base sans passer par les contrôleurs de station de base.

L'invention fournit une technique qui assure un gain important en termes de qualité de service (délai) et de coût par rapport aux techniques classiques de l'art antérieur dans des situations de communications présentant un caractère de proximité, c'est-à-dire lorsque les stations en communication sont suffisamment proches l'une de l'autre, car situées dans des cellules qui sont certes contrôlées par des station de base différents, mais qui peuvent entrer en communication sans qu'il soit nécessaire de transmettre l'intégralité des données aux contrôleurs de stations de base respectifs auxquelles elles sont connectées. En d'autres termes, ces cellules sont accessibles par le biais d'un réseau d'amené maillé, (un tel réseau permettant de relier directement une station de base à une autre). L'invention permet d'éviter de multiples transmissions au travers de ce réseau maillé en permettant à un premier terminal situé dans une première cellule de communiquer avec un deuxième terminal situé dans une deuxième cellule sans faire transiter le flux par les contrôleurs de stations de base.

La technique de l'invention permet également de diminuer les coûts d'un système de communication, tout en maintenant une qualité de service équivalente, voir meilleure que celle obtenue avec les techniques classiques.

L'invention n'est nullement limitée à une mise en oeuvre au sein d'un seul réseau cellulaire comprenant un seul centre de commutation du service mobile MSC. L'invention permet d'optimiser la transmission des données y comprîmes lorsque les stations de base appartiennent à des réseaux cellulaires différents, ces réseaux cellulaires pouvant éventuellement être gérés par des opérateurs de télécommunication différents.

Selon un mode de réalisation original de l'invention, ledit procédé de transmission de données échangées par deux terminaux d'un réseau cellulaire de radiocommunication, chacun desdits terminaux étant respectivement associé à une station de base dudit réseau cellulaire, lesdites stations de base dudit réseau cellulaire étant contrôlées par au moins un contrôleur de station de base, lesdites données comprenant des informations de signalisation, selon un protocole de gestion globale dudit réseau cellulaire, et des données utiles, représentatives d'une communication entre lesdits terminaux.

Selon l'invention, un tel procédé comprend en outre une étape de séparation des données délivrées par un premier desdits terminaux en deux sous-flux, un premier sous-flux comprenant au moins une partie des informations de signalisation, dit sous-flux de maintien de la communication à un niveau de gestion globale, et un second sous-flux, comprenant au moins une partie desdites données utiles, dit sous-flux de données utiles.

Ainsi, l'invention permet d'éviter des temps d'attente dus à la mise en oeuvre du protocole de gestion globale et par la même occasion de réduire la bande passante nécessaire à la transmission des données vers les contrôleurs de stations de base. En effet, en transmettant directement le sous-flux des données utiles d'une station de base à une autre, les utilisateurs n'ont pas à subir des temps de transfert excessifs, notamment lors de l'utilisation de canaux de transmission satellitaires entre les stations de bases et les contrôleurs de stations de base. Les données utiles (telles que les données de parole) sont transmises directement d'une station de base à une autre sans passer par le contrôleur de station de base.

La séparation des données délivrées par le premier terminal peut soit être mise en oeuvre au sien même de la station de base dont dépend le premier terminal ou dans un équipement spécifique qui peut remplir cette fonction.

En d'autres termes, dans un mode de réalisation spécifique de l'invention dans lequel un satellite est utilisé comme élément de transfert de données entre les stations de base et les contrôleurs de station de base, l'invention permet de mettre en oeuvre un bouclage au niveau de plusieurs interfaces « Station de Base/Réseau maillé », via plusieurs adaptateurs lorsque l'appelant et le destinataire sont chacune dans des stations de base différentes et ne dépendant pas de la même terminaison radio et donc du même adaptateur Station de base/Réseau maillé.

Selon une caractéristique particulière de l'invention, ledit procédé de transmission comprend une étape de d'analyse du contenu de tout ou partie desdits messages de signalisation, ladite étape d'analyse incluant une étape de recherche et détection dans ledit contenu desdits messages de signalisation d'informations indicatives d'une activité de trafic.

Préférentiellement, ladite étape d'analyse de tout ou partie des messages de signalisation est mise en oeuvre par un dispositif situé en amont d'au moins une station de base du réseau cellulaire et en aval d'un contrôleur de station de base.

Préférentiellement, ladite opération de bouclage intercellulaire est mise en oeuvre par un dispositif situé en amont d'au moins une station de base du réseau cellulaire et en aval d'un contrôleur de station de base.

Par exemple, c'est le même dispositif qui met en oeuvre les étapes d'analyse et de bouclage intercellulaire précité.

L'invention repose ainsi sur une approche tout à fait nouvelle et inventive de bouclage direct des données échangées entre un appelant et un appelé lorsque ceux-ci sont directement connectables par le réseau maillé (par l'intermédiaire des stations de base) On dit alors que cet appelant et cet appelé sont situé dans un ensemble de bouclage, c'est-à-dire qu'il sont connectés à des stations de base qui peuvent communiquer directement entre elles. L'invention met en oeuvre pour ce faire une stratégie de détection selon laquelle on espionne et analyse le flux de signalisation contenant une succession de messages uniquement destinés aux équipements du réseau cellulaire, et, ou, ou en combinaison, les données échangées entre les usagers. En fonction des résultats de cette analyse, le procédé de l'invention boucle les données à transmettre pendant une communication, si cette dernière présente un caractère de proximité, et ceci de façon totalement transparente pour le réseau cellulaire, qui n'a aucune connaissance de ce bouclage. Le fonctionnement du réseau cellulaire n'est alors aucunement perturbé.

Ce procédé permet alors de gagner judicieusement en termes de délai de transmission. De plus, il s'applique à tout type de données, telles que des données à forte contrainte temps réel, comme la parole, mais aussi aux autres types de données classiquement échangées via un réseau cellulaire, à savoir un texte, une image, etc.

Ainsi, le procédé permet de reboucler les données transmises entre deux utilisateurs lorsque leurs terminaux mobiles dépendent de stations de base différentes, c'est-à-dire lorsqu'ils ne sont pas situés dans une même cellule du réseau cellulaire.

On note que dans le cas du GSM, une station de base est dite BTS, et le procédé est alors mis en oeuvre en amont d'une liaison Abis ou d'un ensemble de liaisons Abis. Cependant, de façon plus générale, l'invention s'applique aussi à tout réseau cellulaire mettant en oeuvre des stations de base, telles que l'UMTS notamment, qui correspond à une évolution du réseau GSM.

Avantageusement, la station de base étant contrôlée par un contrôleur de stations de base parmi une pluralité de contrôleurs de stations de base et la ou les stations de base (BTS) étant connectées avec le ou les contrôleurs de stations de base via un réseau de connexion, le bouclage intercellulaire consiste à acheminer tout ou partie des données échangées entre l'appelant et l'appelé sans transit par le ou les contrôleurs de stations de base (BSC).

Ainsi, dans un réseau cellulaire tel que le GSM par exemple, dans lequel les stations de base sont contrôlées par un contrôleur de stations de base, dit BSC, le procédé de l'invention met en oeuvre un bouclage entre deux utilisateurs en communication, de façon que toutes les données rebouclées ne sont pas remontées jusqu'aux BSC respectifs des deux stations de base (BTS). Elles sont directement rebouclées (c'est-à-dire que les données sont transmises directement d'une BTS à un autre). Ceci diffère donc d'une mise en oeuvre classique d'un réseau cellulaire, dans lequel toutes les données sont systématiquement transmises au contrôleur de stations de base, quelle que soit la localisation des interlocuteurs. Le procédé de l'invention permet alors d'économiser des étapes de double compression/décompression des données, ou encore de transcodage, et des délais de transmission trop important notamment dans le cas particulier de la parole, et ceci de façon transparente pour le réseau cellulaire, qui n'a pas connaissance du bouclage.

De façon avantageuse, la succession des messages de signalisation formant un flux de signalisation, la stratégie de détection inclut une étape d'injection dans les flux de signalisation d'au moins une information de traçage au niveau de l'appelant et/ou de l'appelé, et à reconnaître l'information de traçage injectée dans au niveau de l'autre des interlocuteurs.

Dans un mode de réalisation de l'invention, l'invention met ainsi en oeuvre sa stratégie de détection du caractère proche d'un appel en injectant une information de traçage dans les flux de signalisation correspondant à chacun des deux interlocuteurs en cours de communication. On entend par flux de signalisation la succession des messages de signalisation. L'injection d'une information de traçage dans le flux de signalisation peut alors consister à injecter un message spécifique parmi les messages déjà existants, ou bien à injecter une information au sein des messages eux-mêmes. L'objectif est alors de retrouver cette même information dans chacun des flux de signalisation de l'appelant et l'appelé.

Dans un mode de réalisation de l'invention et en situation de bouclage, seule une partie desdites données échangées entre l'appelé et l'appelant, localisés dans l'ensemble de bouclage, sont transmises à au moins un des contrôleurs de stations de base.

Ce mode de réalisation permet de répondre aux exigences d'écoute légale, selon lesquelles toute information transmise doit transiter par un centre de commutation du service mobile. L'objectif de gain en termes de délai et d'économie de compression/décompression est maintenu, l'invention permet alors de n'utiliser la liaison radio seulement pour remonter les données. Ceci diffère des techniques classiques beaucoup plus coûteuses, selon lesquelles les données sont remontées jusqu'au contrôleur de station de base et en reviennent. L'invention permet de ne transmettre au contrôleur de station de base que des données utiles à la synchronisation, c'est-à-dire de ne transmettre au contrôleur de station de base que les informations nécessaires pour que ce dernier soit au fait de la communication en cours entre l'appelant et l'appelé sans toutefois lui transmettre l'intégralité de cette information.

Selon un mode de réalisation spécifique du procédé de l'invention, ladite première phase de détection est mise en oeuvre dans un premier module situé dans une partie centrale du réseau, et ladite deuxième phase de déclenchement d'une opération de bouclage intercellulaire est mise en oeuvre dans ledit ensemble de bouclage dudit réseau cellulaire sous commande dudit premier module.

Par exemple, la première phase de détection est mise en oeuvre au sein d'un module proche du centre de contrôle du réseau maillé et la phase de déclenchement du bouclage intercellulaire est mise en oeuvre par deux modules situés chacun respectivement en amont des stations de base dont ils ont la charge.

L'invention concerne par ailleurs un réseau cellulaire mettant en oeuvre le procédé précédemment décrit.

Selon l'invention, dans un tel réseau cellulaire l'ensemble des stations de base dépend d'un centre de contrôle de réseau et définit un ensemble de bouclage, chaque station de base, ou chaque ensemble de station de base relié à un même équipement de transmission vers les contrôleurs de station de base, est avantageusement équipé d'un équipement local adaptateur comprenant :
- des moyens de détection du besoin de bouclage intercellulaire ;
- des moyens de réalisation de l'opération de bouclage intercellulaire ;
- des moyens de détection du besoin de débouclage intercellulaire ;
- des moyens de réalisation du l'opération de débouclage intercellulaire ;
- les moyens mettant en oeuvre le procédé tel que décrit précédemment.

Selon un autre mode de réalisation du réseau cellulaire selon l'invention,
- un ensemble de bouclage est constitué d'une station de base, ou d'un ensemble de stations de base reliées à un même équipement de transmission vers les contrôleur de stations de base, est équipée d'un dispositif local adaptateur et,
- le réseau comprend un dispositif optimiseur.

Dans ce mode de réalisation,
- ledit dispositif optimiseur central possède des moyens de détection d'un besoin de bouclage intercellulaire et/ou de débouclage intercellulaire dans un ensemble de bouclage ;
- le dispositif optimiseur comprend des moyens d'émission d'une commande de bouclage intercellulaire et/ou de débouclage intercellulaire à tout dispositif adaptateur situé dans un ensemble de bouclage dans lequel il a détecté ledit besoin de bouclage et/ou de débouclage ;
- chacun desdits dispositifs adaptateurs possède des moyens de réalisation de l'opération de bouclage intercellulaire ou de débouclage intercellulaire sous contrôle de la commande de bouclage intercellulaire ou de débouclage intercellulaire respectivement ;
- le réseau intercellulaire comprend lesdits moyens mettant en oeuvre le procédé tel que décrit précédemment.

L'invention concerne tout réseau cellulaire, du type comprenant au moins une station de base contrôlée par un contrôleur de stations de base et une infrastructure de réseau avec lequel le contrôleur de stations de base est en connexion, l'infrastructure de réseau incluant :
- soit au moins une liaison de type radio à ressources partagées pour relier le ou les stations de base à leur contrôleur de stations de base ;
- soit au moins une liaison de type IP pour relier le ou lesdites stations de base à leur contrôleur de stations de base ;
- soit même une liaison d'amenée maillé quelconque.

L'invention concerne également un dispositif optimiseur de transmission de données échangées par deux terminaux d'un réseau cellulaire de radiocommunication chacun desdits terminaux étant respectivement associé à une station de base dudit réseau cellulaire. Selon l'invention, un tel dispositif optimiseur comprend :
- des moyens d'identification d'un chemin de transmission raccourci entre lesdites stations de base ;
- des moyens de détection d'un besoin de bouclage intercellulaire et/ou de débouclage intercellulaire dans un ensemble de bouclage ;
- des moyens d'émission d'une commande de bouclage intercellulaire et/ou de débouclage intercellulaire à tout dispositif adaptateur situé dans ledit ensemble de bouclage dans lequel il a détecté ledit besoin de bouclage et/ou de débouclage ;

Enfin, l'invention concerne tout équipement local détecteur et/ou adaptateur mettant en oeuvre le procédé tel que décrit précédemment.

### 5 Liste des figures

D'autres caractéristiques et avantages de modes de réalisation de l'invention apparaîtront à la lecture de la description suivante de plusieurs modes de réalisation préférentiel de l'invention, donnés à titre d'exemple indicatif et non limitatif (tous les modes de réalisation de l'invention ne sont pas limités aux caractéristiques et avantages de ce mode de réalisation préférentiel), et des dessins annexés, dans lesquels :
- la figure 1 est une présentation simplifiée de l'architecture GSM ;
- la figure 2A est un exemple d'une architecture GSM faisant intervenir un réseau d'amenée ;

- la figure 2B est un autre exemple d'une architecture GSM faisant intervenir un réseau d'amenée;
- la figure 3A est une présentation d'un bouclage intercellulaire dans une configuration comparable à celle de la figure 2A, et dans lequel le réseau 12 est un réseau IP ;
- la figure 3B est une présentation d'un bouclage intercellulaire dans une configuration comparable à celle de la figure 2B, et dans lequel le réseau 12 est un réseau IP ;
- la figure 4A détaille les composantes des données transmises de manière classique au travers du réseau d'amenée ;
- la figure 4B détaille la transmission des données de synchronisation selon l'invention au travers du réseau d'amenée lors d'un bouclage ;
- la figure 5 décrit sommairement un dispositif optimiseur selon l'invention.

### 6 Description de différents modes de réalisation particuliers de l'invention

### 6.1. Principe général

L'invention repose alors sur une approche tout à fait nouvelle et inventive de transmission de flux de parole dans un réseau GSM mettant en oeuvre une liaison de transmission radio, dans le cas où deux utilisateurs dépendent d'une même station de base ou de deux stations de base proches, en introduisant un dispositif connectant, au sein d'un ensemble de bouclage, deux stations mobiles : on réalise un bouclage intercellulaire lorsque deux utilisateurs du réseau cellulaire sont en communication dans un ensemble de bouclage, qui peut regrouper plusieurs BTS.

En d'autres termes, plutôt que d'utiliser la liaison radio pour transmettre les données d'une première BTS vers un premier BSC (associé à un transcodeur TRAU) puis du second BSC (associé à une autre transcodeur TRAU) vers une seconde BTS à laquelle il est attaché, l'invention se propose d'utiliser la liaison radio pour transmettre les données directement de la première BTS vers la deuxième BTS, réalisant ainsi un bouclage intercellulaire. L'invention permet ainsi d'économiser des ressources radio tout en améliorant les qualités de communication puisque ne passant pas inutilement et plusieurs fois par un même réseau maillé (pouvant être mis en oeuvre par une liaison satellitaire).

On rappelle que, classiquement, le BSC communique avec la ou les BTS qui en dépendent en transmettant d'une part des données de signalisation, via des voies de signalisation, et des données de trafic, contenant les données utiles, via une voie de trafic.

L'invention consiste alors, dans une stratégie de détection de bouclage intercellulaire, à analyser les données de signalisation (à l'aide d'un dispositif optimiseur adéquat par exemple), tout en les transmettant, pour en déduire :
- les possibilités de bouclage intercellulaire, permettant d'éviter la communication de données au BSC, et permettant de réduire le temps de transmission de données ;
- et dans un mode de réalisation préférentiel, les ressources radio à allouer à la liaison satellite afin de diminuer les coûts.

En d'autres termes, on « espionne » les messages et les informations de contrôle, qui ne sont pas à l'origine destinés au système satellite ou au contrôleur de réseau (NCC), mais dont le contenu est analysé de façon à découvrir des possibilités de bouclage intercellulaire (sous la forme d'un chemin de transmission raccourci) et d'optimiser les ressources radio à allouer.

Plus précisément, l'invention, dans un mode de réalisation préférentiel peut être mise en oeuvre par deux types de dispositifs respectivement présentés en figure 2A et 2B : un adaptateur de station de base (100A et 101A), un adaptateur de passerelle (102A et 103A).

Ces dispositifs généralement nommés des adaptateurs, sont situés, dans le mode de réalisation présenté en figure 2A et 2B, à chacune des interfaces citées précédemment. Ils présentent comme des moyens dont la fonction est d'observer et d'analyser le contenu des signalisations initialement destinées aux entités comprises dans le réseau cellulaire (BSC et BTS).

Un troisième dispositif (107), dit dispositif optimiseur CSO, est chargé d'analyser le contenu des signalisations qui transitent.

Dans un mode de réalisation particulier, l'adaptateur 100A peut faire partie intégrante de la BTS 100.

L'échange des données au niveau des interfaces liées au réseau cellulaire, est généralement de type circuit, ou « circuit virtuel », du fait que les données à transmettre correspondent principalement à de la voix, nécessitant un délai court et très peu variable. Cependant, ces mêmes données sont transformées pour être échangées sous forme paquets sur les liaisons satellite LR et IP. Les adaptateurs 100A et 102A ont donc pour fonction de transformer ces données du mode circuit vers le mode paquet et réciproquement.

Selon l'invention, l'optimiseur CSO 107, qui permet d'identifier la possibilité de la transmission des données utiles sans passer par les BSC, est connecté au réseau IP. Dans le mode de réalisation des la figures 2A et 2B, cet optimiseur CSO 107 est en coupure (ou en parallèle) sur le réseau maillé. Dans un autre mode de réalisation, l'optimiseur CSO 107 peut être connecté au réseau IP et mettre en oeuvre l'invention en espionnant les paquets IP qui transitent entre le « hub » (par l'intermédiaire du NCC par exemple) et les contrôleurs de station de base (BSC). L'invention n'est donc nullement limitée à la mise en oeuvre de l'optimiseur CSO 107 en coupure ou en parallèle.

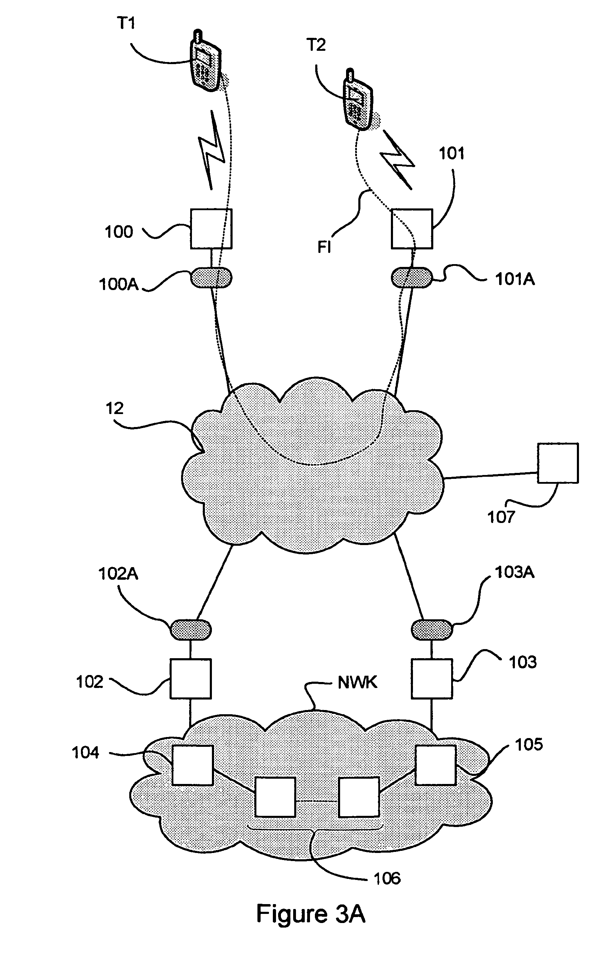

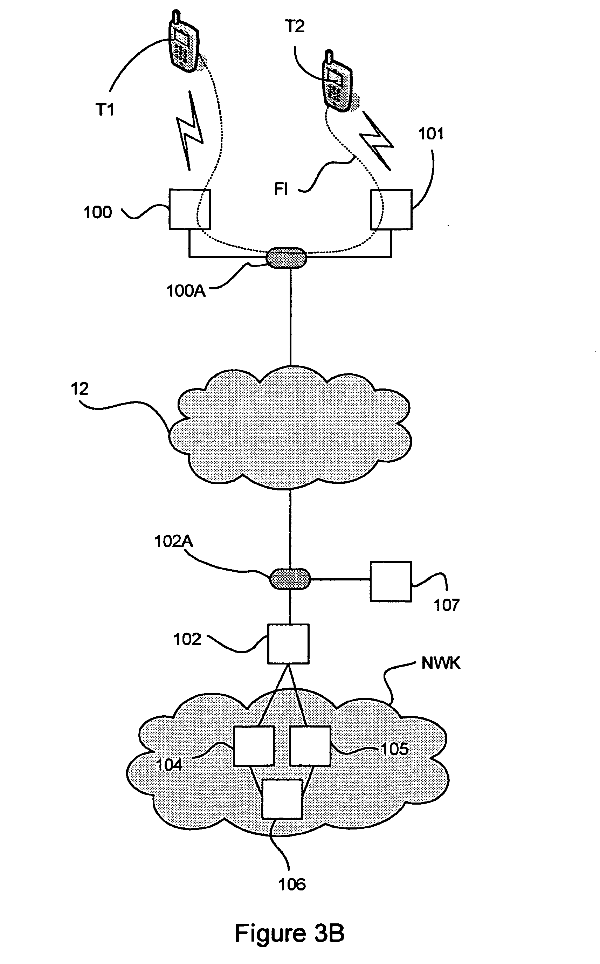

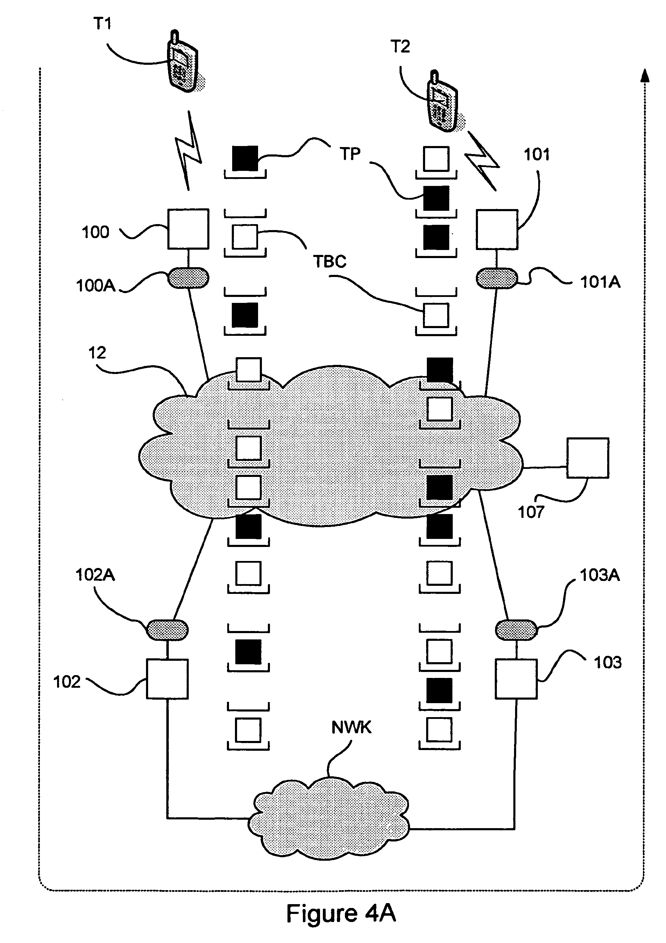

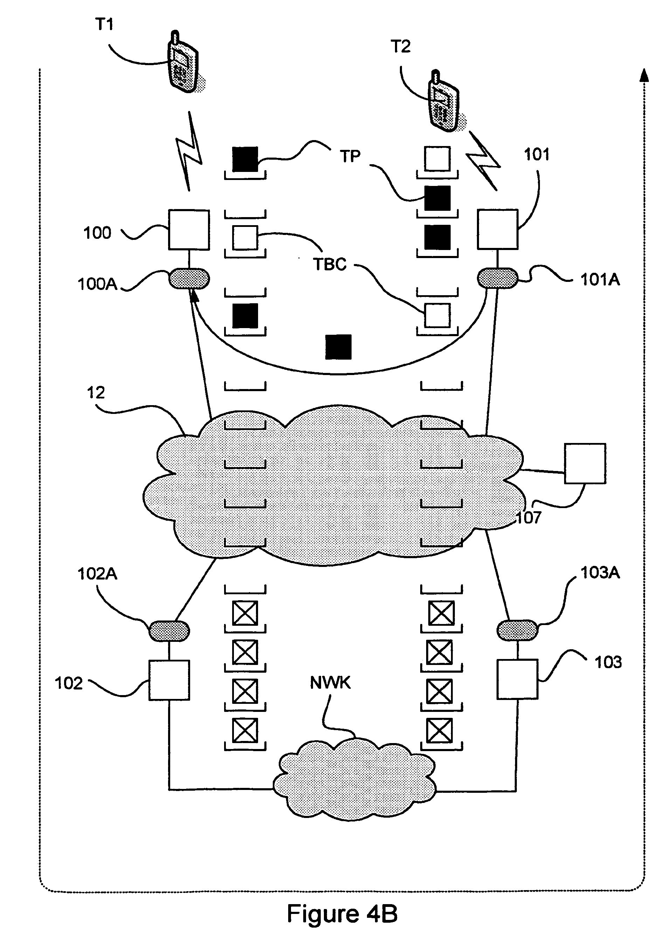

Le dispositif optimiseur CSO est représenté sur les figures 2A, 2B, 3A, 3B, 4A, 4B à divers emplacements dans les réseaux de communication. Le réseau de communication 12 est le réseau maillé (par exemple un réseau IP) auquel les stations de base et les autres équipements des réseaux GSM sont connectés. Le dispositif optimiseur 107 peut être connecté directement au réseau maillé (un réseau satellitaire par exemple) qui sert d'interface entre les BTS et les BSC comme cela est présenté en figure 3A, 4A et 4B. Il peut également être connecté à tout autre réseau (NWK) qui permet de relier les BSC (102, 103) tel que présenté aux figures 2A et 2B. Le dispositif optimiseur CSO 107 peut également, comme cela est présenté à la figure 3B, se situer au niveau du CSG 102A ou encore du CST 101A (non représenté). Ce dispositif optimiseur CSO 107 peut également être situé au coeur de ces équipements susmentionnés, c'est-à-dire être implémenté au sein d'une station de base BTS, d'un contrôleur de station de base BSC par exemple.

Le dispositif optimiseur CSO 107 dispose, selon l'invention, d'une vision globale du ou des réseaux d'accès interconnecté. A ce titre, il est capable de grouper des BTS et de construire des relations dans des groupes de BTS pour permettre l'identification ultérieure de chemins raccourcis de transmission de données et donc de définir des ensembles de bouclage. Le dispositif optimiseur CSO 107 comprend également des moyens de communiquer aux dispositifs locaux (CSG 102A ou encore du CST 101A, voir ci-après), en plus de la commande ordonnant le bouclage intercellulaire, des adresses réseaux permettant d'identifier les BTS au travers desquelles les données du flux doivent être routées et éventuellement des informations complémentaires comme la meilleure route ou la classe de service pour le flux concerné.

Selon l'invention, le dispositif optimiseur CSO 107 peut être situé n'importe où sur le réseau maillé. De plus les fonctions du dispositif optimiseur CSO peuvent être intégrées directement dans un des dispositifs locaux CST 101A ou CSG 102A par exemple.

Le principe général de bouclage intercellulaire de l'invention dans le cas d'un réseau à liaison d'amenée radio à ressources partagées, est illustré en relation avec les figures 3A, 4A et 4B.

L'approche selon l'invention est de transmettre en non bouclé une partie des informations de contrôle, en limitant le bouclage aux données utilisateurs (données utiles) proprement dites. Seule une telle approche permet le bouclage intercellulaire.

L'invention permet ainsi de faire en sorte que toutes les fonctions de contrôle entre BTS et TRAU fonctionnent à l'identique du cas bouclé, éventuellement avec des données utiles factices. La différence entre mode bouclé et non bouclé ne porte alors que sur les données utiles proprement dite, les BTS et les TRAU déroulent leurs protocoles de transmission sans émulation intermédiaire, donc à l'identique en mode bouclé et en mode non bouclé.

Techniquement, l'invention distingue deux types de fonctions remplies par le protocole entre BTS et TRAU, et les informations correspondantes :
- « Type I » : la transmission des données utilisateur proprement dite (données utiles, c'est-à-dire les informations qui encodent la parole);
- « Type II » : des fonctions de contrôle, connexion par connexion, comme par exemple la synchronisation, qui consiste à contrôler le moment précis auquel un TRAU envoie une trame vers la BTS.

Toutes les fonctions dont il est question mettent en jeu des échanges entre BTS et TRAU décrites par le protocole spécifié dans la 08.60 [3].

Le principe est de mettre en place un protocole de fond entre CST et CSG (et donc passant par le réseau intercalé lorsqu'il existe), mettant en oeuvre des échanges de faible volume entre CST et CSG, transportant tout ou partie des données de protocole nécessaire pour les fonctions de « type II », mais sans les informations de « type 1 ».

En d'autres termes, on conserve les fonctions de « type II » à l'identique du cas non bouclé. Les deux TRAU restent donc en communication avec leurs BTS respectives pour ces fonctions. Par exemple, la fonction d'alignement temporel (contrôle par la BTS du moment d'envoi de trames par le TRAU) est maintenue dans l'état bouclé à l'identique du cas non bouclé.

En d'autres termes, et de manière imagée, on peut considérer que ce protocole de fond selon l'invention met en place un système d'échange de wagons, des places (des intervalles dans un flot), sur lesquels on met ou on ne met pas de conteneurs (des données encodant de la parole) selon que le mode de bouclage (non bouclé, bouclé sans remontée des données utilisateur, bouclé avec remontée des données utilisateur, ...).

Le protocole de fond assure principalement l'alignement temporel. A titre d'exemple, il gère nécessairement au minimum les champs suivants d'une trame TRAU FR/EFR telle que définie par [3], c'est à dire les champs impliqués dans la fonction de contrôle de l'alignement temporel :
- Bits C6-C11 des trames BTS vers TRAU (commande de décalage de début de trame)
- Bits T1-T4 aussi bien dans le sens BTS-TRAU que dans le sens TRAU-BTS (ces bits sont en nombre variable, et permettent de contrôler finement la taille de la trame et donc l'instant de départ de la trame suivante)
- Bits C6-C11 des trames TRAU vers BTS (acquit de décalage de début de trame)

Le procédé de l'invention peut avantageusement être mis en oeuvre au sein d'équipements intermédiaires tels que les CST qui interviennent en coupure entre les BTS et les TRAU.

Les deux figures 4A et 4B illustrent graphiquement la méthode. Les références numériques aux figures précédentes ont été conservées pour plus de clarté.

Dans la figure 4A, lorsque aucun bouclage n'est mis en oeuvre, les données échangées entre BTS et TRAU comprennent aussi bien les données de « type I » (« wagons ») que les charges utiles (représentées par divers carrés).

Les données de « type I » transmises sur le segment BTS vers TRAU permettent à la BTS de contrôler la position des wagons sur le segment TRAU vers BTS. Ainsi, dans le mode de fonctionnement classique sans bouclage, les données de « type I » comprennent des trames contenant de la parole (TP), des données de confort (TBC) et des trames vides (permettant de réaliser des contrôles).

Dans le cas où la méthode décrite ici est appliquée (figure 4B), les échanges de trames sont conservés. Du côté CST (100A), la charge utile (parole) est retirée des trames montantes (des trames en direction du CSG 102A et du TRAU 104). Ces charges utiles sont remplacées par de la parole factice (TPF), au niveau du CSG. Les trames de paroles (TP, TBC) quant à elles sont routées directement ver le CST 101A et enfin insérées sur les wagons descendants à destination de la BTS 101. Ainsi, la bande passante nécessaire dans le réseau maillé est grandement diminuée, car seules des trames vides y circulent.

De plus, la conservation des trames (même vides) selon l'invention permet aux équipements de la partie haute du réseau de conserver la réception de données (factices) permettant la conservation des fonctions avancées (messages courts, positionnement, répondeur) pour les terminaux qui sont en situation de bouclage (local ou intercellulaire).

### 6.1.1 Duplication/destruction de charges utiles

Les trames sont de différentes natures, et la fonction de bouclage dans le CST B 101A n'est pas aussi simple que de mettre le conteneur en provenance du CST A 100A sur la prochaine trame. Un fonctionnement en mode FIFO (file d'attente premier arrivé premier servi) est insuffisant. L'insertion ou la suppression de conteneur sont des fonctionnalités nécessaires au bouclage. Deux exemples suivent.

### 6.1.1.1 Insertion

Dans le sens TRAU vers BTS, des trames sont envoyées même en absence d'activité vocale. Ces trames contiennent l'encodage du bruit de confort (« confort noise frames »). Par contre, dans le sens BTS vers TRAU, l'inactivité vocale se traduit par l'absence d'émission de la part du terminal mobile, donc par des trames de type « donnée erronées » (Bad Frame). Le dispositif de bouclage doit donc mémoriser le dernier conteneur reçu en provenance de la BTS 100 et contenant une trame de bruit de confort, et remplir les wagons vers la BTS 101 avec une copie de ce conteneur.

Une datation fine des trames envoyées du CST 102A vers le CST 103A pourrait simplifier la gestion de la file d'attente, en donnant un critère simple aussi bien pour les insertions que pour les destructions. (La difficulté technique n'existe que dans le cas où les CST sont distincts, et vient de la marge qu'il va falloir mettre pour prendre en compte les différences de temps de transmission à travers le réseau intercalé. Une trame peut arriver « trop tôt ».)

### 6.1.1.2 Suppression

Si une trame d'exploitation et maintenance est envoyée du TRAU vers la BTS, il n'est pas possible d'y mettre un conteneur en attente. Le dispositif doit alors supprimer un conteneur éventuel.

Par ailleurs un asynchronisme entre BTS peut entraîner une dérive faisant que la file d'attente au CST 102A se remplit plus vite qu'elle ne se vide. Cela peut amener le besoin de supprimer des données anciennes venant du CST 103A, en faveur de données plus récentes. Dans le cas de CST physiquement distincts, la marge compensant la variabilité du temps de transmission doit être prise en compte dans la décision de suppression de données.

### 6.2. Stratégie de détection

De façon à réaliser le bouclage de la parole, il est avant tout nécessaire de détecter de façon fiable la localisation relative de deux utilisateurs impliqués dans une même communication. Les stratégies de détection du caractère de proximité permettent de détecter des telles possibilités de bouclage. Ces stratégies de détection peuvent comprendre la détection par l'analyse des messages de signalisation (message CONNECT de deux demi-appels).

Dans un réseau cellulaire tel que le système GSM, dès qu'un utilisateur émet ou reçoit un appel, les équipements génèrent une suite d'échanges de messages de signalisation, réalisant un « appel départ » ou un « appel arrivée ». Le réseau gère donc une quantité importante de « demi-appels » de ce type. Lorsque deux utilisateurs sont en communication, le demi-appel départ de l'appelant est fortement corrélé au demi-appel arrivé du destinataire.

Une autre possibilité de détection peut se baser sur une analyse du flux de parole (la corrélation directe des flux de parole est réalisée au début de la communication et déclenche le bouclage quand le mode TFO est utilisé)

### 6.3. L'exigence légale de l'écoute

Le bouclage intercellulaire selon l'invention a pour conséquence que le MSC ne reçoit pas le flux de parole (les données utiles ne sont transmises qu'à la station de base). Dans certains pays ou réseaux la possibilité d'écoute légale est obligatoire, et la parole doit passer par un MSC pour que l'écoute légale telle que spécifiée dans le standard soit possible.

Pour pallier à ce problème, l'invention propose alors, dans un mode de réalisation particulier, de remonter le flux de parole jusqu'au MSC. Une telle technique restreint le gain obtenu par le bouclage intercellulaire, mais ne l'annule pas.

En effet, on rappelle que sans bouclage, chaque sens de la parole passe deux fois par le réseau maillé. Or même en remontant la totalité de l'information aux BSCs puis au MSC, la parole est quand même également complètement transférée directement entre BTS ce qui réduit de moitié le temps de transfert entre deux terminaux.

La technique de l'invention est basée sur le fait que la redescente de la parole peut être supprimée sans restreindre la possibilité d'écoute légale.

Plus précisément, deux utilisateurs de stations mobiles T1 et T2 sont en communication et sont localisés dans un même ensemble de bouclage (un groupe de BTS). Ils sont donc dans l'ensemble de bouclage et un bouclage est effectué sur les deux flux de parole. De façon à répondre aux exigences d'écoute légale, l'adaptateur 100A combine les deux flux de parole pour les faire remonter jusqu'au MSC dans un signal via le réseau maillé 12 et le BSC 102.

Il est aussi possible de remonter les deux flux indépendamment l'un de l'autre. La combinaison permet alors de gagner un canal.

Une telle combinaison peut être réalisée de plusieurs façons, et il est nécessaire de tester chaque approche pour évaluer les meilleures performances.

Dans un premier cas de figure, les flux sont transcodés, additionnés puis transcodés à nouveau : cette approche est coûteuse. Dans un second cas de figure, une sélection est faite trame par trame, en choisissant l'un des deux flux de parole. Ceci entraîne une perte de la parole quand les deux interlocuteurs parlent en même temps. Enfin, il est possible de transmettre les deux flux en les mettant en séquence. Cette technique assure qu'aucune parole ne soit perdue et est équivalente à l'utilisation d'un bon algorithme d'allocation dans le cas où les deux flux de parole sont transmis indépendamment l'un de l'autre.

### 6.4. Dispositif Optimiseur

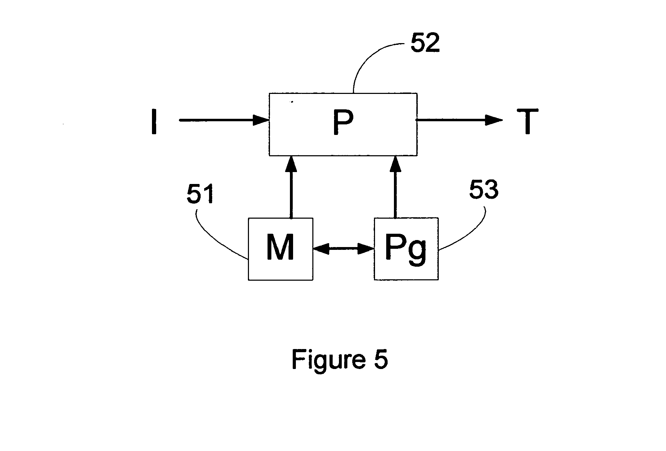

On décrit, en relation avec la figure 5, l'architecture physique sommaire d'un dispositif optimiseur selon l'invention. Un tel dispositif comprend une mémoire 51 constituée d'une mémoire tampon, une unité de traitement 52, équipée par exemple d'un microprocesseur P, et pilotée par le programme d'ordinateur 53, mettant en oeuvre le procédé de transmission de données selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée (I) un ensemble de messages constituant une conversation entre des utilisateurs. Le microprocesseur de l'unité de traitement 52 met en oeuvre les étapes du procédé décrit précédemment, selon les instructions du programme d'ordinateur 53, pour réaliser un bouclage intercellulaire. Pour cela, le moteur comprend, outre la mémoire tampon 51, des moyens d'identification d'un chemin raccourci. Il comprend des moyens de transmission de données par l'intermédiaire du chemin de transmission raccourci, pour réaliser l'opération de bouclage (T) à l'utilisateur. Ces moyens sont pilotés par le microprocesseur de l'unité de traitement 52.

### 6.5. Retour à l'état non bouclé

Il y a de nombreux cas où fournir tous les services GSM demande qu'une communication en mode bouclé soit repassée en mode non bouclé si certains services sont évoqués ultérieurement à l'établissement d'appel. Cela demande d'une part la détection de la nécessité de repasser en mode non bouclé, qui peut se faire par analyse de la signalisation, et d'autre part de modifier le routage des données usager. Le point pertinent est la modification du routage.

Parmi les exemples d'événement nécessitant l'arrêt du mode bouclé, on peut citer le déplacement des usagers amenant un handover tel que la communication n'est plus locale. D'autres exemples viennent des services supplémentaires, en particulier ceux mettant en jeu plusieurs appels simultanés. Un scénario typique est le suivant: alors qu'une communication, locale et bouclée, est en cours entre deux usagers A et B, l'usager A reçoit une indication d'appel en instance d'un usager C. L'usager A met la communication A-B en attente (call hold) et établit une communication A-C qui n'est pas locale: l'état bouclé n'est pas satisfaisant, et la communication entre A et le TRAU qui le dessert (et le connecte à C via le MSC) soit pleinement rétablie.

Dans un mode de fonctionnement de type TFO, les TRAUs ne sont pas synchronisés sur les BTS pendant le mode bouclé. Lors d'une transition vers le mode non bouclé une phase de synchronisation est nécessaire, ce qui d'une part demande des moyens particuliers, d'autre part a un impact sur la uniquement en ce qui concernent les données usagers. Il n'y a aucune rupture de protocole entre la BTS et le TRAU vu aussi bien de la BTS ou du TRAU, les modifications lors du passage bouclé à non-bouclé portent principalement sur le côté réel ou factice des données usager.

### 6.6. Compléments techniques

### 6.6.1 Débit à transmettre

Un défaut principal de l'approche est de demander des échanges de données sur le réseau intercalaire dans le cas bouclé. Pour donner l'ordre de grandeur, une trame Abis transportant de la parole plein débit tout compris fait 320 bits en moyenne, dont 260 bits pour la parole. Mais sur les 60 bits restants, seule une partie demande à être transportée entre BTS et TRAU, qui ne devrait pas excéder une vingtaine de bits.

Selon un mode de réalisation spécifique, un encodage soigné des 'mini-trames' échangées en mode bouclé permet de limiter ce défaut. En particulier, un encodage avec des représentations de taille variable permet de réduire l'information à transmettre à très peu de chose (de l'ordre d'un octet) pour les cas statistiquement significatifs. Par exemple, la trame la plus courante dans une communication FR doit être (C1-C5=FR, C6-C11=No change, BFI, TAF, T1-T4=1111), ce qui peut être encodé selon l'invention, en poussant loin la compression, sur 3 bits (un pour BFI, un pour TAF, et un bit d'échappement pour distinguer des autres cas). On pourrait aussi envisager réduire encore le débit en ne transmettant que les 'mini-trames' qui diffèrent du cas le plus courant, ou de la précédente, etc.

Plus généralement, l'encodage spécifié par la norme TS GSM 08.60 n'est pas optimisé, et laisse de la place pour une optimisation par ré encodage. Par exemple le champ C1-C5 encode le type de trame, et permet donc 32 cas différents, alors que dans une application typique deux ou trois types de trame seulement sont utilisés.

Note: Pour la signification des champs, voir la norme TS GSM 08.60.

### 6.6.2 Configuration des CST et CSG

Une fois une décision de passer en mode bouclé (ou de repasser en mode non bouclé) prise, les CST et CSG doivent être configurés dans le mode décidé. On utilise les dénominations des figures précédentes. Par ailleurs, il est rappelé que ce qui est décrit se limite à un sens de transmission des données usagers. Le rôle des équipements est permuté pour l'autre sens, à savoir le dispositif physique remplissant le rôle de CST A 100A pour une direction remplit le rôle de CST B 101A pour l'autre direction.

### 6.6.2.1 CST A 100A

En mode bouclé total le CST A 100A :
- envoie au CST B 101A, après un transcodage éventuel dans un format propre au fournisseur de CST/CSG (c'est à dire, pas celui de la norme) les trames reçues en provenance de la BTS (par trame, on entend les données usager et tout ou partie des informations de contrôle), cet envoi se faisant via le point de routage (interne au dispositif dans le cas d'un seul CST, ou via le réseau intercalé dans le cas de CST distincts) ;
- envoie au CSG A 102A, après transcodage dans un format propre au fournisseur de CST/CSG, tout ou partie des données de contrôle des trames reçues en provenance de la BTS.

En mode bouclé partiel (permettant l'écoute légale), le CST A 100A :
- envoie au CST B 101A, dans un format propre au fournisseur de CST/CSG (c'est à dire, passe immédiatement en mode bouclé partiel, puis passe en mode non bouclé un certain temps (décidé par configuration) en mode non bouclé. Ce délai permet d'éviter des pertes de données dues au l'ajout du délai de transmission causé par la traversée du réseau intercalé (notamment dans le cas d'une transmission par satellite).

Si le délai de latence est nul (c'est à dire, les données ne sont pas transmises en double), l'usager va percevoir un silence dont la durée est de l'ordre du temps de transmission aller-retour a jouter par le réseau intercalé (plusieurs centaines de millisecondes dans le cas d'une transmission par satellite). Une durée non nulle permet d'autres approches pour le CST B 101A.

### 6.6.2.2 CSG A 102A

Le CSG A 102A a un fonctionnement identique dans tous les modes : il développe les informations reçues en provenance du CST A 100A en trames conformes au standard GSM et les envoie au TRAU via le BSC. S'il reçoit une trame contenant des données usager, il la développe avec ces données; s'il ne reçoit que des informations de contrôle, il a joute des données de parole factice.

Il n'y a donc pas besoin d'instruction de débouclage (ni de bouclage) vers le CSG A 102A.

### 6.6.2.3 CSG B 103A

En mode bouclé total ou partiel, le CSG B 103A :
- envoie au CST B 101A, après transcodage dans un format propre au fournisseur de CST/CSG, tout ou partie des données de contrôle des trames reçues en provenance du TRAU. A la réception d'une instruction de débouclage (en provenance de l'organe de décision) le CSG B 103A passe immédiatement en mode en mode non bouclé.

### 6.6.2.4 CST B 101A

En mode bouclé total ou partiel, le CST B 101A :
- Construit des enveloppes de trame à partir des informations de contrôle reçues en provenance du CSG B 103A ;
- Peuple les données usager de ces trames à partir des données reçues en provenance du CST A 100A ;
- Envoie les trames ainsi construites à la BTS.

Lors d'un débouclage, le CST B 101A peut recevoir (selon la configuration de la fonction CST A 100A) pendant un certain temps des données en double, d'une part en provenance du CST A 100A d'autre part en provenance du CSG B 103A. Les données venant du CST A 100A arrivent plusieurs centaines de millisecondes en avance des données similaires en provenance du CSG B 103A. Dans une réalisation simple, avec un passage brutal en mode non bouclé quand les données arrivent du CSG B 103A, l'usager reçoit en double l'information, une sorte de bégaiement. Autre possibilité : proposer des approches plus sophistiquées que le silence ou le bégaiement.

Les approches simples (silence ou répétition) ne nécessitent pas d'instruction de débouclage. Les approches plus complexes peuvent le demander. L'instruction de débouclage étant reçue par l'équipement au titre de sa fonction de CST A 100A pour l'autre sens, cette indication peut être utilisée dans les cas éventuels d'approches plus sophistiquées pour gérer la transition.

## Revendications

1. Procédé de transmission de données échangées par deux terminaux (T1, T2) d'un réseau cellulaire de radiocommunication comprenant un réseau d'infrastructure de radiocommunication, chacun desdits terminaux étant respectivement associé à une station de base (100, 101) du réseau d'infrastructure de radiocommunication **caractérisé en ce qu'**il comprend :
- une étape d'analyse du contenu de tout ou partie de messages de signalisation d'un flux de signalisation échangé par les terminaux avec le réseau d'infrastructure de radiocommunication ;
- une étape d'identification, en fonction de ladite étape d'analyse, d'un chemin de transmission raccourci entre lesdites stations de base (100, 101), ledit chemin de transmission raccourci définissant un chemin de transmission direct de données entre lesdites stations de base (100, 101) sans transiter par un équipement de transcodage (104, 105) présent au sein dudit réseau cellulaire de radiocommunication, chacune desdites stations de base étant respectivement connectée à un dispositif local adaptateur (100A, 101A) ;
- une étape de transmission d'au moins une partie desdites données par l'intermédiaire dudit chemin de transmission raccourci transitant par lesdits dispositifs locaux adaptateurs (100A, 101A), dite opération de bouclage intercellulaire.

2. Procédé de transmission selon la revendication 1, **caractérisé en ce que** lesdites stations de base (100, 101) dudit réseau cellulaire de radiocommunication étant contrôlées par au moins un contrôleur de station de base (102, 103), lesdites données comprenant des informations de contrôle, selon un protocole de gestion globale dudit réseau cellulaire, et des données utilisateurs, représentatives d'une communication entre lesdits terminaux et **en ce qu'**il comprend en outre une étape de séparation des données délivrées par un premier desdits terminaux (T1) en deux sous-flux, un premier sous-flux comprenant au moins une partie desdites informations de contrôle, dit sous-flux de maintien de la communication à un niveau de gestion globale, et un second sous-flux, comprenant au moins une partie desdites données utilisateurs, dit sous-flux de données utilisateurs.

3. Procédé selon la revendication 2, **caractérisé en ce que** ladite étape d'analyse du contenu de tout ou partie de messages de signalisation inclut une étape de recherche et détection dans ledit contenu desdits messages de signalisation d'informations indicatives d'une activité de trafic.

4. Procédé selon la revendication 3, **caractérisé en ce que** ladite étape d'analyse de tout ou partie des messages de signalisation est mise en oeuvre par un dispositif situé en amont d'au moins une station de base (100) du réseau cellulaire de radiocommunication et en aval d'un contrôleur de station de base (102).

5. Procédé selon la revendication 3, **caractérisé en ce que** ladite étape d'analyse de tout ou partie des messages de signalisation est mise en oeuvre au sein d'un contrôleur de station de base (102).

6. Procédé selon l'une quelconque des revendications 1 à 5, **caractérisé en ce que**, la station de base (100, 101) étant contrôlée par un contrôleur de stations de base (102, 103) parmi une pluralité de contrôleurs de stations de base et la ou les stations de base étant connectées avec le ou les contrôleurs de stations de base via un réseau d'amenée maillé, le bouclage intercellulaire consiste à acheminer ladite au moins une partie desdites données échangées entre l'appelant et l'appelé sans transit par le un réseau de connexion central dudit réseau cellulaire.

7. Procédé selon l'une quelconque des revendications 3 à 6, **caractérisé en ce que** la succession des messages de signalisation formant un flux de signalisation, ledit procédé comprend une étape d'injection dans ledit flux de signalisation d'au moins une information de traçage au niveau de l'appelant et/ou de l'appelé, et à reconnaître ladite au moins une information de traçage dans lors de ladite étape d'analyse.

8. Procédé selon l'une quelconque des revendications 1 à 7, **caractérisé en ce que**, en situation de bouclage, seule une partie desdites données échangées entre l'appelé et l'appelant, sont transmises à au moins un transcodeur (104, 105).

9. Procédé selon l'une quelconque des revendications 1 à 8 **caractérisé en ce que** ladite opération de bouclage intercellulaire est mise en oeuvre par un dispositif (100A, 101A) situé en amont d'au moins une station de base (100) du réseau cellulaire de radiocommunication et en aval d'un contrôleur de station de base (102).

10. Réseau cellulaire de radiocommunication comprenant un réseau d'infrastructure de radiocommunication et deux terminaux, chacun desdits terminaux étant respectivement associé à une station de base (100, 101) du réseau d'infrastructure de radiocommunication **caractérisé en ce qu'**il comprend :
- des moyens de détection du besoin de bouclage intercellulaire comprenant des moyens d'analyse du contenu de tout ou partie de messages de signalisation d'un flux de signalisation échangé par les terminaux avec le réseau d'infrastructure de radiocommunication ;
- des moyens de réalisation de l'opération de bouclage intercellulaire comprenant des moyens d'identification, en fonction de ladite étape d'analyse, d'un chemin de transmission raccourci entre des stations de base (100, 101), ledit chemin de transmission raccourci définissant un chemin de transmission direct de données entre lesdites stations de base (100, 101) sans transiter par un équipement de transcodage (104, 105) présent au sein dudit réseau cellulaire de radiocommunication, chacune desdites stations de base étant respectivement connectée à un dispositif local adaptateur (100A, 101A) et de moyens d'émission d'une commande de bouclage intercellulaire.

11. Réseau cellulaire de radiocommunication selon la revendication 10, **caractérisé en ce qu'**au moins un ensemble de bouclage constitué d'une station de base (100, 101), ou d'un ensemble de stations de base reliées à un même équipement de transmission vers les contrôleurs de station de base (102, 103), est équipé d'un dispositif local adaptateur (100A), ledit réseau comprenant un dispositif optimiseur (107) ;
et **en ce que** :
- ledit dispositif optimiseur (107) comprend des moyens de détection d'un besoin de bouclage intercellulaire et/ou de débouclage intercellulaire entre au moins certaines desdits terminaux dudit ensemble de bouclage ;
- le dispositif optimiseur (107) comprend des moyens d'émission d'une commande de bouclage intercellulaire et/ou de débouclage intercellulaire à tout dispositif adaptateur situé dans ledit ensemble de bouclage dans laquelle il a détecté ledit besoin de bouclage et/ou de débouclage ;
- chacun desdits dispositifs adaptateurs possède des moyens de réalisation de l'opération de bouclage intercellulaire ou de débouclage intercellulaire sous contrôle de la commande de bouclage intercellulaire ou de débouclage intercellulaire respectivement ;
- le réseau intercellulaire comprend lesdits moyens mettant en oeuvre le procédé tel que décrit précédemment.

12. Dispositif optimiseur (107) de transmission de données échangées par deux terminaux (T1, T2) d'un réseau cellulaire de radiocommunication comprenant un réseau d'infrastructure de radiocommunication, chacun desdits terminaux étant respectivement associé à une station de base (100, 101) du réseau d'infrastructure de radiocommunication, **caractérisé en ce qu'**il comprend :
- des moyens de détection d'un besoin de bouclage intercellulaire et/ou de débouclage intercellulaire entre au moins certaines des stations de base d'un ensemble de bouclage constitué d'une station de base (100, 101), ou d'un ensemble de stations de base reliées à un même équipement de transmission vers les contrôleurs de station de base (102, 103), comprenant des moyens d'analyse du contenu de tout ou partie de messages de signalisation d'un flux de signalisation échangé par les terminaux avec le réseau d'infrastructure de radiocommunication;
- des moyens d'identification d'un chemin de transmission raccourci entre lesdites stations de base (100, 101), ledit chemin de transmission raccourci définissant un chemin de transmission direct de données entre lesdites stations de base (100, 101) sans transiter par un équipement de transcodage (104, 105) présent au sein dudit réseau cellulaire de radiocommunication et auquel chacune desdites stations de base (100, 101) est respectivement connecté ;
- des moyens d'émission d'une commande de bouclage intercellulaire et/ou de débouclage intercellulaire à tout dispositif adaptateur situé dans ledit ensemble de bouclage dans laquelle il a détecté ledit besoin de bouclage et/ou de débouclage ;

## Patentansprüche

1. Verfahren zur Übertragung von Daten, die von zwei Terminals (T1, T2) eines zellularen Mobilfunknetzes ausgetauscht werden, das ein Mobilfunkinfrastrukturnetz aufweist, wobei jedes der Terminals jeweils mit einer Basisstation (100, 101) des Mobilfunkinfrastrukturnetzes verbunden ist, **dadurch gekennzeichnet, dass** es Folgendes aufweist:
- einen Schritt der Analyse des Inhalts sämtlicher oder eines Teils von Signalisierungsnachrichten eines Signalisierungsstroms, der von den Terminals mit dem Mobilfunkinfrastrukturnetz ausgetauscht wird,
- einen Schritt der Identifikation, in Abhängigkeit von dem Analyseschritt, eines verkürzten Übertragungspfads zwischen den Basisstationen (100, 101), wobei der verkürzte Übertragungspfad einen direkten Datenübertragungspfad zwischen den Basisstationen (100, 101) definiert, ohne über eine Transcodierungseinrichtung (104, 105) zu laufen, die innerhalb des zellularen Mobilfunknetzes vorhanden ist, wobei jede der Basisstationen jeweils mit einer lokalen Interfacevorrichtung (100A, 101A) verbunden ist,
- einen Schritt der Übertragung mindestens eines Teils der Daten über den verkürzten Übertragungspfad, der über die lokalen Interfacevorrichtungen (100A, 101A) läuft, interzellularer Loop-Back-Vorgang genannt.

2. Übertragungsverfahren nach Anspruch 1, **dadurch gekennzeichnet, dass** die Basisstationen (100, 101) des zellularen Mobilfunknetzes von mindestens einem Basisstationssteuergerät (102, 103) gesteuert sind, wobei die Daten Steuerinformationen enthalten, gemäß einem globalen Verwaltungsprotokoll des zellularen Netzes, und Benutzerdaten, die für eine Kommunikation zwischen den Terminals repräsentativ sind, und dass es ferner einen Schritt des Auftrennens der von einem ersten der Terminals (T1) gelieferten Daten in zwei Subströme aufweist, einen ersten Substrom, der mindestens einen Teil der Steuerinformationen enthält, Substrom zum Aufrechterhalten der Kommunikation auf einem Niveau globaler Verwaltung genannt, und einen zweiten Substrom, der mindestens einen Teil der Benutzerdaten enthält, Benutzerdatensubstrom genannt.

3. Verfahren nach Anspruch 2, **dadurch gekennzeichnet, dass** der Analyseschritt des Inhalts sämtlicher oder eines Teils von Signalisierungsnachrichten einen Such- und Erfassungsschritt in dem Inhalt der Signalisierungsnachrichten von Informationen, die auf eine Verkehrsaktivität hinweisen, aufweist.

4. Verfahren nach Anspruch 3, **dadurch gekennzeichnet, dass** der Analyseschritt sämtlicher oder eines Teils der Signalisierungsnachrichten von einer Vorrichtung umgesetzt wird, die sich stromaufwärts mindestens einer Basisstation (100) des zellularen Mobilfunknetzes und stromabwärts eines Basisstationssteuergeräts (102) befindet.

5. Verfahren nach Anspruch 3, **dadurch gekennzeichnet, dass** der Analyseschritt sämtlicher oder eines Teils der Signalisierungsnachrichten innerhalb eines Basisstationssteuergeräts (102) umgesetzt wird.

6. Verfahren nach einem der Ansprüche 1 bis 5, **dadurch gekennzeichnet, dass**, da die Basisstation (100, 101) von einem Basisstationssteuergerät (102, 103) unter einer Vielzahl von Basisstationssteuergeräten gesteuert wird und die Basisstation oder die Basisstationen mit dem oder den Basisstationssteuergeräten über ein vermaschtes Netz verbunden sind, das interzellulare Loop-Back darin besteht, die oder mindestens einen Teil der Daten, die zwischen dem Anrufer und dem Angerufenen ausgetauscht werden, zu befördern, ohne über das zentrale Verbindungsnetz des zellulares Netzes zu laufen.

7. Verfahren nach einem der Ansprüche 3 bis 6, **dadurch gekennzeichnet, dass** die Abfolge der Signalisierungsnachrichten einen Signalisierungsstrom bildet, wobei das Verfahren einen Injektionsschritt in den Signalisierungsstrom mindestens einer Rückverfolgungsinformation auf dem Niveau des Anrufers und/oder des Angerufenen aufweist, und zum Erkennen der mindestens einen Rückverfolgungsinformation bei dem Analyseschritt.

8. Verfahren nach einem der Ansprüche 1 bis 7, **dadurch gekennzeichnet, dass** in einer Loop-Back-Situation nur ein Teil der zwischen dem Angerufenen und dem Anrufenden übertragenen Daten zu mindestens einem Transcoder (104, 105) übertragen wird.

9. Verfahren nach einem der Ansprüche 1 bis 8, **dadurch gekennzeichnet, dass** der interzellulare Loop-Back-Vorgang von einer Vorrichtung (100A, 101A) ausgeführt wird, die stromaufwärts mindestens einer Basisstation (100) des zellularen Mobilfunknetzes und stromabwärts eines Basisstationssteuergeräts (102) liegt.

10. Zellulares Mobilfunknetz, das ein Mobilfunkinfrastrukturnetz und zwei Terminals aufweist, wobei jedes der Terminals jeweils mit einer Basisstation (100, 101) des Mobilfunkinfrastrukturnetzes verbunden ist, **dadurch gekennzeichnet, dass** es Folgendes aufweist:
- Mittel zum Erfassen des interzellularen Loop-Back-Bedarfs, die Mittel zur Analyse des Inhalts sämtlicher oder eines Teils von Signalisierungsnachrichten eines Signalisierungsstroms, der von den Terminals mit dem Mobilfunkinfrastrukturnetz ausgetauscht wird, aufweist,
- Mittel zur Ausführung des interzellularen Loop-Back-Vorgangs, die Mittel zur Identifikation, in Abhängigkeit von dem Analyseschritt, eines verkürzten Übertragungspfads zwischen den Basisstationen (100, 101) aufweisen, wobei der verkürzte Übertragungspfad einen direkten Datenübertragungspfad zwischen den Basisstationen (100, 101) definiert, ohne über eine Transcodierungseinrichtung (104, 105), die innerhalb des zellularen Mobilfunknetzes vorhanden ist, zu laufen, wobei jede der Basisstationen jeweils mit einer lokalen Interfacevorrichtung (100A, 101A) und Mitteln zum Senden eines interzellularen Loop-Back-Befehls verbunden ist.

11. Zellulares Mobilfunknetz nach Anspruch 10, **dadurch gekennzeichnet, dass** mindestens eine Loop-Back-Einheit, die aus einer Basisstation (100, 101) oder aus einer Einheit von Basisstationen, die mit ein und derselben Übertragungseinrichtung zu den Basisstationssteuergeräten (102, 103) verbunden ist, besteht, mit einer lokalen Interfacevorrichtung (100A) versehen ist, wobei das Netz eine Optimierungsvorrichtung (107) aufweist, und dass
- die Optimierungsvorrichtung (107) Mittel zum Erfassen eines interzellularen Loop-Back-Bedarfs und/oder interzellularen Entbündelungsbedarfs wenigstens zwischen bestimmten der Terminals der Loop-Back-Einheit aufweist,
- die Optimierungsvorrichtung (107) Mittel zum Senden eines interzellularen Loop-Back-Befehls und/oder interzellularen Entbündelungsbefehls an jede Interfacevorrichtung, die sich in der Loop-Back-Einheit befindet, in der der Loop-Back-Bedarf und/oder Entbündelungsbedarf erfasst wurde, aufweist,
- jede der Interfacevorrichtungen Mittel zum Ausführen des interzellularen Loop-Back-Vorgangs oder interzellularen Entbündelungsvorgangs unter der Steuerung jeweils des interzellularen Loop-Back-Befehls oder interzellularen Entbündelungsbefehls besitzt,
- das interzellulare Netz die Mittel aufweist, die das oben beschriebene Verfahren umsetzen.

12. Optimierungsvorrichtung (107) zur Übertragung von Daten, die von zwei Terminals (T1, T2) eines zellularen Mobilfunknetzes ausgetauscht werden, das ein Mobilfunkinfrastrukturnetz aufweist, wobei jedes der Terminals jeweils mit einer Basisstation (100, 101) des Mobilfunkinfrastrukturnetzes verbunden ist, **dadurch gekennzeichnet, dass** sie Folgendes aufweist:
- Mittel zum Erfassen eines interzellularen Loop-Back-Bedarfs und/oder interzellularen Entbündelungsbedarfs wenigstens zwischen bestimmten der Basisstationen einer Loop-Back-Einheit, die aus einer Basisstation (100, 101) oder aus einer Einheit von Basisstationen, die mit ein und derselben Übertragungseinrichtung zu den Basisstationssteuergeräten (102, 103) verbunden sind, besteht, die Mittel zur Analyse des Inhalts sämtlicher oder eines Teils der Signalisierungsnachrichten eines Signalisierungsstroms, der von den Terminals mit dem Mobilfunkinfrastrukturnetz ausgetauscht wird, aufweist,
- Mittel zur Identifikation eines verkürzten Übertragungspfads zwischen den Basisstationen (100, 101), wobei der verkürzte Übertragungspfad einen direkten Datenübertragungspfad zwischen den Basisstationen (100, 101) definiert, ohne über eine Transcodierungseinrichtung (104, 105) zu laufen, die innerhalb des zellularen Mobilfunknetzes vorhanden ist, und mit der jede der Basisstationen (100, 101) jeweils verbunden ist,
- Mittel zum Senden eines interzellularen Loop-Back-Befehls und/oder interzellularen Entbündelungsbefehls an jede Interfacevorrichtung, die sich in der Loop-Back-Einheit befindet, in der der Loop-Back-Bedarf und/oder Entbündelungsbedarf erfasst wurde.

## Claims

1. Method for transmitting data exchanged by two terminals (T1, T2) of a cellular radio-communication network comprising a radio-communication infrastructure network, wherein each of said terminals is respectively associated to a base station (100, 101) of the radio-communication infrastructure network, **characterised in that** it comprises:
- a step for analysing the content of all or part of signalling messages exchanged between the terminals and the radio-communication infrastructure network ;
- a step for identifying, depending on said analysing step, a short transmission path between said base stations (100, 101), wherein said short transmission path defines a direct data transmission path between said base stations (100, 101) without passing via transcoding equipment (104, 105) present in said cellular radio-communication network, each of said base stations (100, 101) being respectively connected to a local adaptor equipment (100A, 101A);
- a step for transmitting at least part of said data via said short transmission path passing through said local adaptor equipments (100A, 101A), called inter-cellular loop operation.

2. Transmission method according to claim 1, **characterised in that** said base stations (100, 101) of said cellular radio-communication network are controlled by at least one base station controller (102, 103), wherein said data comprises control information, according to a global control protocol of said cellular network, and user data that is representative of a communication between said terminals, and **in that** it further comprises a step for the separation of the data supplied by a first of said terminals (T1) into two sub-flows, wherein a first sub-flow comprises at least part of the control information, called the sub-flow for maintaining the communication at a global control level, and a second sub-flow, comprising at least part of said user data, called the sub-flow of user data.

3. Method according to claim 2, **characterised in that** said step for analysing the content of all or part of the signalling messages includes a step to search and detect in said content of said signalling messages information which indicate traffic activity.

4. Method according to claim 3, **characterised in that** said step for analysing all or part of the signalling messages is implemented by a device situated upstream of at least one base station (100) of the cellular radio-communication network and downstream of a base station controller (102).

5. Method according to claim 3, **characterised in that** said step for analysing all or part of the signalling messages is implemented inside a base station controller (102).

6. Method according to any of claims 1 to 5, **characterised in that** the base station (100, 101) is controlled by a base station controller (102, 103) that is part of a plurality of base station controllers and where the base station(s) are connected to the base station controller(s) via a meshed backhaul network, wherein the inter-cellular loop consists in transporting said all or part of the said data exchanged between the caller and the receiver without passing via the central connection network of said cellular network.

7. Method according to any of claims 3 to 6, **characterised in that** the succession of signalling messages forms a signalling flow, wherein the method includes a step of injecting into said signalling flow at least one item of tracing information at caller and/or receiver level, and to recognise said at least one item of tracing information during said analysis step.

8. Method according to any of claims 1 to 7, **characterised in that**, in loop configuration, only part of said data exchanged between the caller and the receiver, is transmitted to at least one transcoder (104, 105).

9. Method according to any of claims 1 to 8, **characterised in that** said inter-cellular loop operation is implemented by a device (100A, 101A), that is situated upstream of at least one base station (100) of the cellular radio-communication network and downstream of a base station controller (102).

10. Radio-communication cellular network comprising a radio-communication infrastructure network and two terminals, wherein each of said terminals is respectively associated to a base station (100, 101) of the radio-communication infrastructure network, **characterised in that** it comprises:
- means of detecting the inter-cellular loop requirement, comprising means of analysing the content of all or part of signalling messages exchanged between the terminals and the radio-communication infrastructure network ;
- means of carrying out the inter-cellular loop, comprising means of identifying, depending on said analysing step, a short transmission path between some base stations (100, 101), wherein said short transmission path defines a direct data transmission path between said base stations (100, 101) without passing via transcoding equipment (104, 105) present in said cellular radio-communication network, each of said base stations (100, 101) being respectively connected to a local adaptor equipment (100A, 101A) and to means of emitting an inter-cellular loop command.

11. Radio-communication cellular network according to claim 10, **characterised in that** at least one loopable set composed of one base station (100, 101), or one set of base stations connected to a same item of equipment for transmitting to the base station controllers (102, 103), is equipped with a local adaptor equipment (100A), wherein said network comprises an optimising device (107);
and **in that**:
- said optimising device (107) has means for detecting an inter-cellular loop requirement and/or inter-cellular unloop requirement between at least some of said terminals of said loopable set;
- the optimising device (107) has means for emitting an inter-cellular loop and/or inter-cellular unloop command to any adaptor device in a loopable set in which it has detected the said loop and/or unloop requirement;
- each of said adaptor devices has means for carrying out the inter-cellular loop or inter-cellular unloop respectively controlled by the inter-cellular loop or inter-cellular unloop command;
- the inter-cellular network comprises said means which implement the method as described previously.

12. Optimising device (107) for the transmission of data exchanged by two terminals (T1, T2) of a cellular radio-communication network comprising a radio-communication infrastructure network, wherein each of said terminals is respectively associated to a base station (100, 101) of the radio-communication infrastructure network, **characterised in that** it comprises:
- means of detecting an inter-cellular loop requirement and/or inter-cellular unloop requirement between at least some of the base stations of a loopable set composed of one base station (100, 101), or one set of base stations connected to a same item of equipment for transmitting to the base station controllers (102, 103), comprising means of analysing the content of all or part of signalling messages of a signalling flow exchanged between the terminals and the radio-communication infrastructure network
- means of identifying a short transmission path between said base stations (100, 101), wherein said short transmission path defines a direct data transmission path between said base stations (100, 101) without passing via transcoding equipment (104, 105) present in said cellular radio-communication network and to which each of said base station is respectively connected;
- means for emitting an inter-cellular loop and/or inter-cellular unloop command to any adaptor device in said loopable set in which it has detected the loop and/or unloop requirement.
